# EUROPEAN PATENT SPECIFICATION

(11) **EP 1 893 323 B1**
(45) Date of publication and mention of the grant of the patent: **30.03.2011**
(21) Application number: 06706468.3
(22) Date of filing: 28.01.2006
(51) Int. Cl.: B01D 67/00, H01M 4/94

(54) **A METHOD OF PREPARING A RADIATION FUEL CELL MEMBRANE WITH ENHANCED CHEMICAL STABILITY AND A MEMBRANE ELECTRODE ASSEMBLY**
VERFAHREN ZUR HERSTELLUNG EINER STRAHLUNGSBRENNSTOFFZELLENMEMBRAN MIT VERBESSERTER CHEMISCHER STABILITÄT UND MEMBRANELEKTRODENANORDNUNG
MÉTHODE POUR PRÉPARER UNE MEMBRANE DE PILE À COMBUSTIBLE GREFFÉE PAR RADIATION AYANT UNE MEILLEURE STABILITÉ CHIMIQUE ET UN ASSEMBLAGE MEMBRANE-ÉLECTRODE

(30) Priority: 11.02.2005 EP 05002875
(43) Date of publication of application: 05.03.2008
(73) Proprietor: PAUL SCHERRER INSTITUT, 5232 Villigen PSI (CH)
(72) Inventor: SCHERER, Günther, G., CH-5607 Hägglingen (CH); GUBLER, Lorenz, CH-5200 Brugg (CH); SLASKI, Michal, CH-4051 Basel (CH)
(74) Representative: Kley, Hansjörg
(86) International application number: PCT/EP2006/000752
(87) International publication number: WO 2006/084591

(56) References cited:
- US-A- 6 103 078
- US-A1- 2004 009 305

## Description

The present invention relates to a method for preparing a membrane to be assembled in a membrane electrode assembly. Further, the present invention relates to a membrane electrode assembly.

Solid polymer electrolytes are used in electrochemical cells to exchange ions between anode and cathode and as separator for electrons and reactants between anode and cathode. The use of an ion exchange membrane as electrolyte was first described around 40 years ago by Grubb (General Electric, USA), i.e. in the US patent 2,913,511. Solid polymer electrolytes find widespread application in a range of electrochemical devices, such as electrolyzers, supercapacitors, ozone generators, fuel cells, etc.

The use of an ion exchange membrane is particularly interesting in a fuel cell, because it leads to simplification of the cell construction and system design, since the use of corrosive liquid electrolytes can be avoided. Proton exchange membranes (PEMs) find application in polymer electrolyte fuel cell (PEFC) stacks. These materials contain acid groups that are attached to the macromolecules of the polymer. The dissociation of the acid leads to the formation of mobile protons and fixed anions.

Predominantly, perfluorinated membrane materials, such as Nafion® (DuPont, USA), Flemion® (Asahi Glass, Japan), Aciplex® (Asahi Kasei, Japan), are used in PEFCs. The elaborate fabrication process, however, renders these membranes expensive components. Alternative, cost-effective membranes and processes have therefore a considerable relevance to enable the development and fabrication of cost-competitive materials for fuel cells. One such attractive method is the pre-irradiation induced graft copolymerization, whereby a preformed commodity polymer film is modified to introduce desirable functionality, such as proton conductivity. The method has been employed by a range of companies and groups from academia for fuel cell application. The process consists of the irradiation of the base polymer film to generate radicals, followed by a grafting step, whereby the activated film is brought into contact with a solution containing monomers, which results in a radical polymerization reaction and hence the growth of polymer side chains attached to the polymer chains of the base film. Subsequent reaction steps may follow to introduce proton conductivity. A popular monomer for radiation grafting is styrene, because it shows fast radical polymerization and, hence, practical degrees of grafting are obtained within a suitably short time of a few hours. The grafted polystyrene is subsequently sulfonated to introduce sulfonic acid sites to the styrene rings.

US 2004/009305 A1, for example, shows the use of α-methylstyrene as a possible monomer. Possible membranes are disclosed in US 6,103,078.

Sulfonated polystyrene has been used as proton exchange membrane material in fuel cells. It has been recognized early, however, that the aggressive conditions within the fuel cell, i.e. the reductive as well as oxidative conditions, and peroxide intermediates, impose considerable chemical stress onto the membrane material. Polystyrene is particularly prone to chemical attack in an environment of peroxide and radical intermediates due to the susceptibility of the α-hydrogen position towards oxidative attack.

Therefore, the use of an alternative grafting monomer with higher intrinsic chemical stability is of advantage. The grafting monomer is from the wide range of radically copolymerizable monomers- Non-limiting examples of monomers include acrylic acid, methacrylic acid, maleic anhydride, maleimide, N-phenylmaleimide, acrylates, methacrylates; vinyl sulfonic acid, vinyl phosphonic acid; α-methylstyrene, α-fluorostyrene, α,β,β,-trifluorostyrene, trifluoro-α-methylstyrene; 2-acrylamido-2-methyl-1-propanesulfonic acid, 2-acrylamido-1-ethanesulfonic acid. The monomers may already carry cation exchange functionality (e.g. vinylsulfonic acid), or it may be introduced in a subsequent step (e.g. sulfonation of styrene units).The radical induced graft copolymerization kinetics of these monomers may be poor. In this case, only small graft levels are obtained or long grafting times have to be used. In order to improve grafting kinetics, an additional monomer, i.e. a co-monomer, can be used to obtain practical graft levels within reasonable grafting times. The selection of base monomer M₁ and co-monomer M₂ is such that hetero-polymerization, i.e. the formation of -M₁-M₂-M₁-M₂- sequences, is kinetically favored, leading to overall faster incorporation of M₁ into the graft polymer compared to when the base monomer M₁ alone. The co-monomer may but need not contribute to the cation exchange functionality, either directly or after post-treatment. Therefore, the co-monomer can be any monomer amenable to radical copolymerization, such as vinyl chloride, vinyl fluoride, vinylidene fluoride, tetrafluoroethylene, hexafluoropropylene; vinyl ethers, fluorinated vinyl ethers, vinyl esters, fluorinated vinyl esters; acrylamide, acrylonitrile, methacrylonitrile; N-vinylpyrrolidone, or any of the monomers listed above as base monomers.

In addition to base monomer and co-monomer, a third monomer acting as crosslinker may be added to the grafting solution. Crosslinkers have two or more double bonds to provide the necessary links between different polymer chains, such as divinylbenzene, bis(vinyl phenyl)ethane, diisopropenylbenzene, triallylcyanurate, N,N'-methylene-bis-acrylamide, diallylmaleinate.

In view of the degradation mechanism of styrene grafted and slufonated membranes in the polymer electrolyte fuel cell, as mentioned earlier, styrene derived monomers with protected α-position are regarded as promising candidates for obtaining grafted membranes with intrinsically higher chemical stability. In the prior art, α,β,γ-trifluorostyrene (TFS) and α-methylstyrene (AMS) have been suggested. Being a fluorinated compound, TFS has the drawback of being significantly more expensive than styrene or AMS. In addition, grafting kinetics are poor, sulfonation is difficult, and the resulting mechanical properties of the membranes mediocre. The drawback of AMS, on the other hand, is the poor radical polymerization kinetics, low ceiling temperature of 61 C, the tendency for adverse chain transfer reactions to occur, and the concomitant poor grafting yield, which has been confirmed in our own experiments. It has been shown, however, that AMS grafted films can be obtained if acrylonitrile (AN) is used as co-monomer, because it stabilizes the terminal radical on the propagating graft polymer chain. It was shown that the graft copolymerization of AMS:AN mixtures, followed by sulfonation, yields proton exchange membranes of higher chemical stability compared to pure styrene grafted or styrene-AN grafted membranes, using FEP and ETFE as base polymer. Fuel cell experiments, however, have not been reported and the electrochemical characteristics of these membranes in a realistic environment remain to be established.

It is therefore the aim of the present invention to provide a method for preparing a membrane to be assembled in a membrane electrode assembly and a membrane electrode assembly which both have significant mechanical stability and appropriate fuel cell characteristics.

These objectives are achieved according to the present invention by a method for preparing a membrane to be assembled in a membrane electrode assembly, such as a polymer electrolyte membrane fuel cell, comprising the steps of:
a) irradiating the base polymer film with electromagnetic and/or particle radiation in order to form reactive centers, i.e; radicals, within the said polymer film;
b) exposing the irradiated film to a mixture of monomers amenable to radical polymerization comprising α-methylstyrene (AMS) and methacrylonitrile (MAN) and, optionally, a crosslinker such as divinylbenzene (DVB) or diisopropenylbenzene (DIPB), in order to achieve the formation of a graft copolymer in said irradiated film.
c) Sulfonation of the grafted film to introduce sulfonic acid sites providing ionic conductivity of the material.

With respect to the membrane electrode assembly these objects are achieved according to the present invention by a membrane electrode assembly, comprising a polymer electrolyte layer which is sandwiched between a cathode layer and an anode layer, whereby said polymer electrolyte layer is a graft copolymer membrane which comprise α-methylstyrene (AMS) and methacrylonitrile (MAN) as co-monomer. Other possible monomer combinations may be derivatives of α-methylstyrene, such as sodium α-methylstyrene sulfonate, methyl-α-methylstyrene, methoxy-α-methylstyrene. Base polymers may be selected from the range of fluorinated, partially fluorinated or non-fluorinated films, including polytetrafluoroethylene, poly(tetrafluoroethylene-co-perfluoropropyl vinyl ether), poly(tetrafluoroethylene-co-hexafluoropropylene), poly(vinylidene fluoride), poly(vinylidene fluoride-co-hexafluoropropylene), poly(ethylene-alt-tetrafluoroethylene), polyvinylfluoride, polyethylene, polypropylene.

In a preferred embodiment of the present invention the molar ratio of α-methylstyrene / methacrylonitrile may be in the range of 50/50 to 90/10, preferably in the range of 60/40 to 80/20. The monomer mixture may comprise additional monomers to obtain specific added membrane functionality, e.g. crosslinking. In a preferred embodiment for a crosslinked membrane, the molar fraction of crosslinker with respect to total monomer content may be in the range of 1 to 20 %, preferably in the range of 5 to 10 %. The neat monomer mixture may be used for the grafting reaction, or a solvent or solvent mixture, such as isopropanol and water, may be added to the monomer mixture.

In summarizing the invention it was found that for the radiation induced graft polymerization of AMS onto base films such as FEP and ETFE, methacrylonitrile (MAN) is a suitable co-monomer to circumvent the poor polymerization kinetics of AMS alone and yield practical graft levels within reasonable grafting times. Following experimental observations were made:
- The ratio of AMS to total graft component incorporated into the base film was higher when MAN is used as co-monomer instead of AN
- The grafted films comprising base film and grafted

AMS / MAN were sulfonated to yield ion exchange capacities of the order of 1 mmol/g.
- The nitrile groups of MAN do not hydrolyze in the graft • copolymer in the presence of AMS during the sulfonation procedure used.
- The molar ratio of AMS : MAN in the grafted film is around 1 : 1.
- Degrees of sulfonation attained were around 100 %, corresponding to one sulfonic acid group per AMS unit.
- Crosslinked films were prepared by introducing a crosslinker, i.e. divinylbenzene (DVB) or diisopropenylbenzene (DIPB), as third monomer to the grafting solution.
- AMS / MAN (/ DVB or DIPB) grafted and sulfonated membranes on the basis of FEP-25 were successfully tested in sub-scale fuel cells. Electrochemical characteristics similar to standard styrene / divinylbenzene grafted membranes and commercial membranes such as Nafion 112 were measured.
- The AMS / MAN based membranes showed superior temperature stability and durability in the fuel cell compared to uncrosslinked styrene based membranes.
- Crosslinked AMS / MAN / DVB membrane showed superior performance and durability in the fuel cell compared to uncrosslinked AMS / MAN membrane

These observation show a number of significant advantages over the teachings derived from the prior art:
- Radiation grafted membranes using AMS as monomer offers the prospect of a fuel cell membrane with inherently superior durability over styrene based membranes.
- Using MAN as co-monomer in the grafting of AMS, practical graft levels can be obtained using reasonable grafting conditions. By using a comonomer, the problem of poor grafting kinetics of neat AMS monomer can be overcome.
- The MAN units in the AMS / MAN membranes do not adversely affect subsequent process steps (e.g. sulfonation) or the mechanical properties of the membrane.
- The MAN units do not interfere adversely with the proton conductivity provided by the sulfonated AMS units.
- There is indication that MAN is less harmful to health than AN.

The following figures and tables are used to introduce preferred embodiments of the present invention. Table 1 shows the properties of radiation grafted and sulfonated membranes based on FEP-25.

**Table 1: properties of radiation grafted and sulfonated membranes based on FEP-25, compared to Nafion® 112 (commercial membrane)**

| **No.** | **Membrane** | **Graft Level** | **water content** | **Ion Exchange Capacity** | **Conductivity** |
|---|---|---|---|---|---|
| | | [mass-%] | [H₂O/SO₃H] | [mmol/g] | [mS/cm] |
| 1 | FEP-*g*-(PS-co-DVB) | 18.2 | 6.7 | 1.36 | 41 |
| 2 | FEP-*g*-PS | 18.0 | 29.5 | 1.33 | 72 |
| 3 | FEP-*g*-(AMS-co-MAN) | 34.5 | 24.6 | 1.38 | 98 |
| 4 | FEP-*g*-(AMS-co-MAN-co-DVB) | 20.8 | 36.0 | 1.28 | 89 |
| 5 | FEP-*g*-(AMS-co-MAN-co-DIPB) | 31.4 | 19.6 | 1.25 | 86 |
| 6 | Nafion® 112 | - | 18.0 | 0.91 | 82 |

Membrane 1 is a standard styrene grafted and divinylbenzene (DVB) crosslinked membrane which is used in H₂ / air fuel cells. Membrane 2 is a comparison example without DVB crosslinker. This type of membrane is very unstable in the fuel cell and leads to-rapid failure of the membrane electrode assembly (cf. **Table 2).** Membranes 3,4 and 5 are of the inventive type, using AMS / MAN (membrane 3), AMS / MAN / DVB (membrane 4), and AMS / MAN / DIPB (membrane 5) as monomers, respectively. It is shown that ion exchange capacity and conductivity similar to the styrene grafted membranes and a commercial membrane (Nafion® 112) are obtained.

Table 2 shows the life time of uncrosslinked radiation grafted and sulfonated membranes based on FEP-25 in the single cell.

**Table 2: Life time of radiation grafted and sulfonated membranes based on FEP-25 in the single cell.**

| **Experiment** | **System** | **Life Time** | **Maximum Temperature** |
|---|---|---|---|
| | | [h] | [°C] |
| 1 | FEP-*g*-PS | 49 | 80 |
| 2 | FEP-*g*-PS | 169 | 60 |
| 3 | FEP-*g*- (AMS-co-MAN) | 533 | 80 |
| 4 | FEP-*g*-(AMS-co-MAN) | 524 | 80 |

Pure styrene grafted membranes show inferior temperature stability and life time in the single cell compared to membranes of the inventive type.

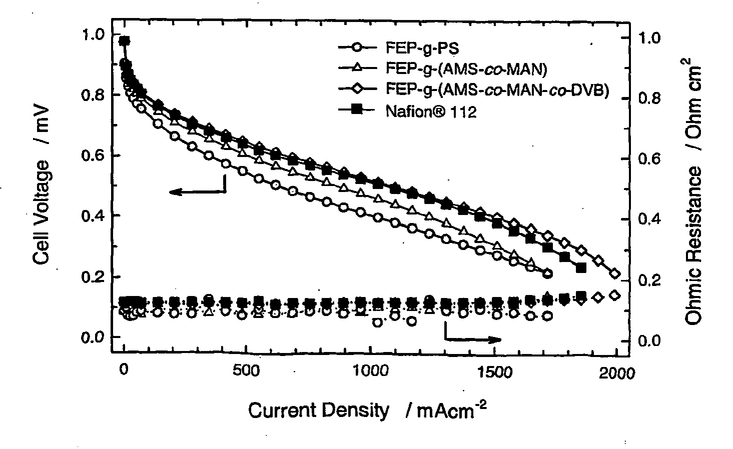

Figure 1 illustrates single cell polarization curves using styrene grafted membranes, membranes of the inventive type, including an uncrosslinked and a DVB crosslinked sample, and a commercial membrane (Nafion® 112). Cell temperature 60 °C; fuel: H₂, oxidant: O₂, both gases humidified at 60°C, pressure 1 barₐ.

The single cell polarization curve (**Figure 1**) shows that both-AMS based grafted membranes have superior performance compared to the styrene grafted membrane. The DVB crosslinked membrane with higher graft level yields a higher performance compared to the uncrosslinked membrane. All three membranes show similar *in situ* ohmic resistance.

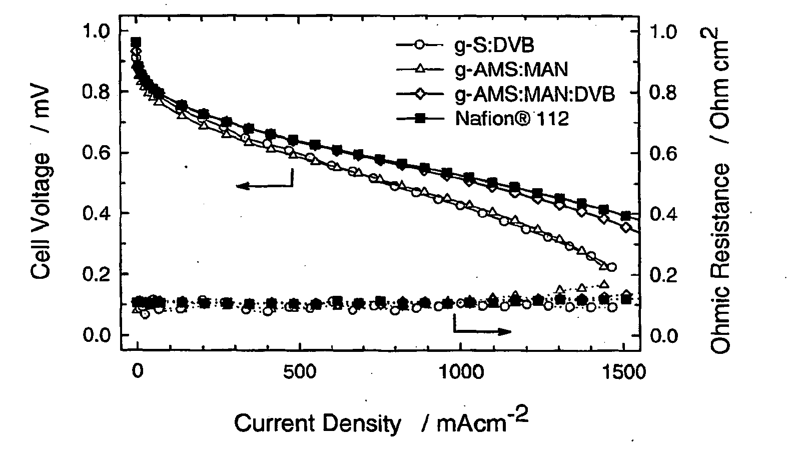

Figure 2 illustrates single cell polarization curves using styrene grafted membranes, membranes of the inventive type, including an uncrosslinked and a DVB crosslinked sample, and a commercial membrane (Nafion® 112). Cell temperature 80°C; fuel: H₂, oxidant: O₂, both gases humidified at 80°C, pressure 1 barₐ.

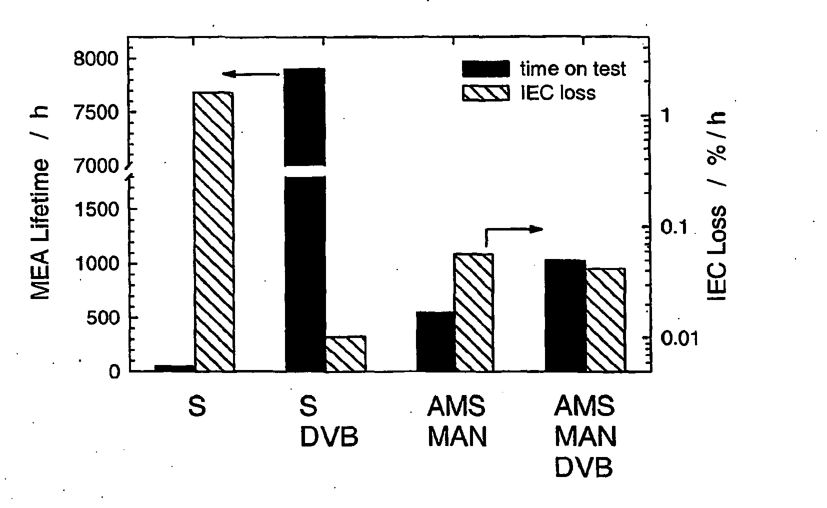

Figure 3 illustrates single cell durability at a cell temperature of 80°C and the rate of ion exchange capacity (IEC) loss, determined from the difference in IEC before and after the test, divided by the MEA lifetime.

Compared to the styrene grafted and DVB crosslinked membrane, the AMS/MAN grafted membrane shows similar single cell performance (**Figure 2**) as compared to the curves in Figure 1. The AMS/MAN grafted and DVB crosslinked membrane shows superior performance similar to the Nafion® 112 commercial membrane.

The following section explains two embodiments of the method to generate a radiation grafted fuel cell membrane with the afore-mentioned enhanced properties. Thereby, the synthesis of AMS/MAN and AMS/MAN/DVB membranes for PEFC contains the two known steps of grafting and sulfonation.

### Synthesis of FEP-g-(AMS-co-MAN)

An FEP film of 25 µm thickness was irradiated with an electron beam in air atmosphere with dose of 25 kGy. Piece of 1g of preirradiated FEP film was placed in a trap-type reaction tube, equipped with two stopcocks. The tube was filled with a 60 ml of reaction mixture prepared by mixing: 12.7 cm³ of AMS, 5.3 cm³ of MAN, 12 cm³ of water and 30 cm³ of isopropanol The tube was closed. Nitrogen was passed through at a flow rate 12 N1/h, by the valve connected with the bottom tube. After one hour of purging the tube was sealed and transferred to a water bath. The temperature of the water bath was maintained at 60 °C. After 22 hrs of reaction, the solution was removed from the tube, and the tube with the product was washed three times with acetone (60 ml each washing). The product was removed from the tube and left for drying in a vacuum oven at 50°C for 3 hrs.

### Synthesis of FEP-g-(AMS-co-MAN-co-DVB)

The procedure was identical to the one decribed in the previous section, the only difference being the addition of 0.5 vol-% (0.3 cm³) DVB to the grafting solution.

### Sulfonation

650 cm³ of dry methylene chloride and 30 cm³ of chlorosulfonic acid were placed in a beaker shaped glass vessel, equipped with magnetic stirrer, gas vent and cap. 5g (about five sheets) of FEP-g-(AMS-co-MAN) film were placed in the reaction vessel. The mixture was stirred for 6 hrs. After 6 hrs product was transferred to a beaker filled with water. After 12 hrs the product was placed in a beaker with 500 cm³ of aqueous solution of sodium hydroxide (4g/dm³) and stirred for 6 hrs. Subsequently, the product was washed with water and treated with 500 cm³ of 2M H₂SO₄ for 6 hrs. To remove sulfuric acid, the product was treated in water at 80°C for 6 hrs. The water was changed until pH was neutral.

### Units and Abbreviation:

MAN - methacrylonitrile
AMS - alpha methylstyrene
FEP - poly(tetrafluoroethylene -co-hexafluoropropylene) N1/h - normal liter per hour
FEP-g-(AMS-co-MAN) - FEP grafted with AMS and MAN
kGy - kilo Grey

### Materials:

Monomers were used as received (MAN Aldrich 19541-3, AMS Aldrich M8, 090-3). (DVB) Water was demineralized using a Serapur Pro 90CN system (conductivity < 0.5 µS/cm). Chlorosulfonic acid was pure grade, purchased from Fluka (26388). Sodium hydroxide, sulfuric acid and isopropanol were analytical grade. FEP film was purchased from DuPont, and was stored between irradiation and grafting at -80°-C for ca. 2 months.

## Claims

1. A method for preparing a membrane to be assembled in a membrane electrode assembly, such as a polymer electrolyte membrane fuel cell, comprising the steps of:
a) irradiating the base polymer film with electromagnetic and/or particle radiation in order to form reactive centers, i.e. radical, within said polymer film;
b) exposing the irradiated film to a mixture of monomers amenable to radical polymerization comprising α-methylstyrene, methacrylonitrile and preferably divinylbenzene or diisopropenylbenzene as crosslinker in order to achieve the formation of a graft copolymer in said irradiated film; and
c) Sulfonation of the grafted film to introduce sulfonic acid sites providing ionic conductivity of the grafted film.

2. The method according to claim 1, wherein
the ratio of α-methylstyrene / methacrylonitrile is in the range of 50/50 to 90/10, preferably in the range of 80/20.

3. The method according to claim 1 or 2, wherein
the mixture comprises 10 to 40 vol% α-methylstyrene and 2 to 20 vol% methacrylonitrile.

4. The method according to claim 3, wherein
the mixture contains further monomers, such as a crosslinker, or a solvent or solvent mixture, such as isopropanol and water.

5. The method according to claim 4, wherein crosslinker is divinylbenzene or diisopropenylbenzene, with the molar fraction of crosslinker with respect to total monomer content in the range of 1 to 20 %, preferably in the range of 5 to 10 %.

6. A membrane electrode assembly, comprising a polymer electrolyte layer which is sandwiched between a cathode layer and an anode layer, **characterized in that** said polymer electrolyte layer is prepared according to the method of any of the preceding claims 1 to 5.

## Patentansprüche

1. Verfahren zur Herstellung einer Membran zum Anordnen in einer Membranelektrodenanordnung, wie etwa einer Polymerelektrolyt-Membran-Brennstoffzelle, welches die folgenden Schritte umfasst:
a) Bestrahlen der Basispolymerfolie mit elektromagnetischer und/oder Teilchenstrahlung, um reaktive Zentren, d.h. Radikale, in der besagten Polymerfolie zu bilden;
b) Aussetzen der bestrahlten Folie gegenüber einem Gemisch von einer Radikalpolymerisation zugänglichen Monomeren, welches α-Methylstyrol, Methacrylnitril und vorzugsweise Divinylbenzol oder Diisopropenylbenzol als Vernetzer umfasst, um die Bildung eines Pfropfcopolymers in der besagten bestrahlten Folie zu erzielen; und
c) Sulfonierung der gepfropften Folie, um Sulfonsäurezentren zu erzeugen, welche die Ionenleitfähigkeit der gepfropften Folie gewährleisten.

2. Verfahren nach Anspruch 1, wobei das Verhältnis α-Methylstyrol / Methacrylnitril im Bereich von 50/50 bis 90/10, vorzugsweise im Bereich von 80/20 liegt.

3. Verfahren nach Anspruch 1 oder 2, wobei das Gemisch 10 bis 40 Vol.-% α-Methylstyrol und 2 bis 20 Vol.-% Methacrylnitril umfasst.

4. Verfahren nach Anspruch 3, wobei das Gemisch weitere Monomere enthält, wie etwa einen Vernetzer oder ein Lösungsmittel oder Lösungsmittelgemisch, wie etwa Isopropanol und Wasser.

5. Verfahren nach Anspruch 4, wobei der Vernetzer Divinylbenzol oder Diisopropenylbenzol ist, wobei der Molenbruch des Vernetzers, bezogen auf den Gesamtmonomergehalt, im Bereich von 1 bis 20 %, vorzugsweise im Bereich von 5 bis 10 % liegt.

6. Membranelektrodenanordnung, die eine Polymerelektrolytschicht umfasst, welche zwischen einer Kathodenschicht und einer Anodenschicht sandwichartig angeordnet ist, **dadurch gekennzeichnet, dass** die besagte Polymerelektrolytschicht entsprechend dem Verfahren nach einem der vorhergehenden Ansprüche 1 bis 5 hergestellt ist.

## Revendications

1. Procédé de préparation d'une membrane à assembler dans un ensemble membrane-électrode tel qu'une pile à combustible à membrane électrolyte en polymère, comprenant les stades dans lesquels :
a) on expose le film de base en polymère à du rayonnement électromagnétique et/ou de particules afin de former des centres réactifs, c'est-à-dire des radicaux, au sein du film en polymère ;
b) on soumet le film exposé à un mélange de monomères pouvant être amené à une polymérisation par radicaux comprenant de α-méthylstyrène, du méthacrylonitrile et, de préférence, du divinylbenzène ou du diisopropénylbenzène comme agent de réticulation pour obtenir la formation d'un copolymère greffé dans le film exposé ; et
c) on sulfone le film greffé pour introduire des sites acide sulfonique procurant une conductivité ionique du film greffé.

2. Procédé suivant la revendication 1, dans lequel le rapport de α-méthylstyrène/méthacrylonitrile est dans la plage de 50/50 à 90/10, de préférence de l'ordre de 80/20.

3. Procédé suivant la revendication 1 ou 2, dans lequel le mélange comprend de 10 à 40% en volume d'α-méthylstyrène et de 2 à 20% en volume de méthacrylonitrile.

4. Procédé suivant la revendication 3, dans lequel le mélange contient en outre des monomères, tels qu'un agent de réticulation ou un solvant ou un mélange de solvants, tels que de l'isopropanol et de l'eau.

5. Procédé suivant la revendication 4, dans lequel l'agent de réticulation est le divinylbenzène ou le diisopropénylbenzène, la fraction molaire de l'agent de réticulation par rapport à la teneur totale en monomère étant dans la plage allant de 1 à 20%, de préférence, dans la plage allant de 5 à 10%.

6. Ensemble membrane électrode, comprenant une couche d'électrolyte polymère, qui est prise en sandwich entre une couche de cathode et une couche d'anode, **caractérisé en ce que** la couche d'électrolyte polymère est préparée suivant le procédé selon l'une des revendications précédentes 1 à 5.
